(19) Europäisches Patentamt
European Patent Office
Office européen des brevets

(11) **EP 4 033 348 A1**

(12) **EUROPEAN PATENT APPLICATION**

(43) Date of publication:
**27.07.2022 Bulletin 2022/30**

(21) Application number: **21200019.4**

(22) Date of filing: **29.09.2021**

(51) International Patent Classification (IPC):
***G06F 7/58*** *(2006.01)*

(52) Cooperative Patent Classification (CPC):
**G06F 7/582**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.12.2020 JP 2020209205**

(71) Applicant: **FUJITSU LIMITED**
**Kanagawa 211-8588 (JP)**

(72) Inventor: **TAMIYA, Yutaka**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **RANDOM NUMBER GENERATION PROGRAM AND RANDOM NUMBER GENERATION METHOD, RANDOM NUMBER GENERATION APPARATUS**

(57) A random number generation program in which a computer performs processing of generating a second seed list that includes a new seed for each new random number sequence based on a first seed list that includes a seed for each random number sequence regarding a plurality of the random number sequences with a predetermined length, generating a random number with a predetermined length for each new random number sequence based on a seed included in the second seed list, determining whether or not the generated random number with the predetermined length matches the seed included in the second seed list, and repeatedly generating the second seed list until the random number with the predetermined length does not match the seed included in the second seed list.

FIG. 5

EP 4 033 348 A1

**Description**

[Field]

The embodiment discussed herein is related to a random number generation program or the like.

[Background Art]

In application programs (hereinafter, application) such as Monte Carlo simulation and Deep Learning, a random number plays an important role.
For example, in the Monte Carlo simulation, by repeating trials many times based on a trial for probabilistically determining a target model state transition with random numbers, simulation of the target model is performed.
In a case where the above applications are accelerated by parallel computing, calculation accuracy of each calculation core is not guaranteed unless random number sequences with no (or small) cross correlation are used.

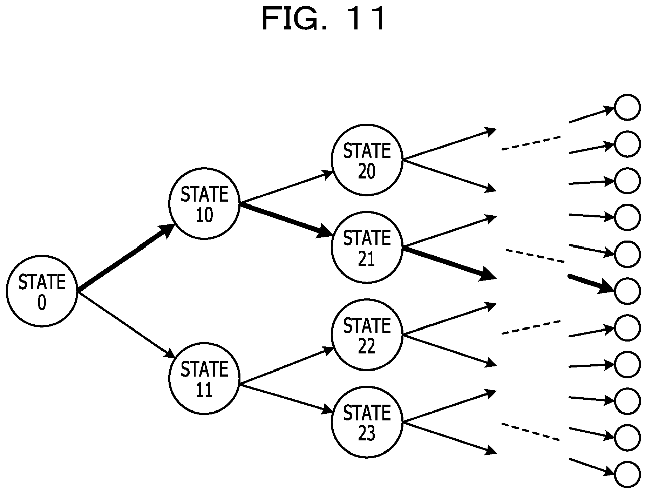

FIG. 11 is a diagram illustrating an example of a state transition in the Monte Carlo simulation. For example, in a case of the Monte Carlo simulation for calculating a plurality of state transitions in parallel, when all the calculation cores use the same random number sequence, all the states transition in the same manner, and it makes no sense to execute parallel processing.
For example, it is assumed that a state 0 is transitioned to a state 10 when $r \leq p$. The number r ($0 \leq r \leq 1$) is a random number. p is a transition probability from the state 0 to the state 10. Here, when the same random number sequence is used, states of all the calculation cores are transitioned from the state 0 to the state 10. Similarly, the state transition subsequent to the state 10 is the same for all the calculation cores. Note that transition from the state 0 to the end state is performed in one trial.
Pseudo random numbers are often used for random number generation because of its simplicity of calculation. Examples of the pseudo random numbers include a Linear Feedback Shift Register (LFSR), xorshift, or the like.
A seed (seed) and a generation expression are used to calculate a general pseudo random number. For example, a 0-th random number R (0) is indicated by the expression (1). A seed value is set to "s" in the expression (1). As indicated in the expression (2), an i + 1-th random number R (i + 1) is sequentially generated from an i-th random number R (i). X () indicates a generation expression. The generation expression X () is a combination of a shift operation and an exclusive OR.
[Expression 1]

$$R(0) = s \qquad \cdots (1)$$

[Expression 2]

$$R(i + 1) = X\big(R(i)\big) = X^{(i+1)}(s) \qquad \cdots (2)$$

Here, when a pseudo random number is used for parallel calculation, it is possible to create random number sequences with no (small) cross correlation by using appropriate and different seed values. However, in order to create a set of random number sequences with no cross correlation, how to select a seed value becomes an issue.
For example, in the related art, a computer is described that has a function for generating a large number of uniform random numbers by the multiplication congruence method. Such a computer holds m powers of multipliers or m random numbers that have been created so as to make calculations for respectively generating m random numbers independent of each other and execute vector processing.

[Citation List]

[Patent Literature]

[PTL 1]Japanese Laid-open Patent Publication No. 4-199225.
[PTL 2] Japanese Laid-open Patent Publication No. 2018-045501.
[PTL 3] International Publication Pamphlet No. WO 2005/124537.
[PTL 4] Japanese Laid-open Patent Publication No. 2016-184307.

[Summary]

[Technical Problem]

However, in the related art described above, the m random numbers with no cross correlation are realized by calculating the m powers of the multipliers in advance. Therefore, it is difficult to cope with a case where a degree of parallelism is equal to or more than m.

An object of one aspect of the embodiment is to provide a random number generation program and a random number generation method that can generate random numbers with a low cross correlation between random number sequences.

[Solution to Problem]

In one aspect of embodiment, 1. A random number generation program in which a computer performs processing of: generating a second seed list that includes a new seed for each new random number sequence based on a first seed list that includes a seed for each random number sequence regarding a plurality of the random number sequences with a predetermined length; generating a random number with a predetermined length for each new random number sequence based on a seed included in the second seed list; determining whether or not the generated random number with the predetermined length matches the seed included in the second seed list; and repeatedly generating the second seed list until the random number with the predetermined length does not match the seed included in the second seed list.

[Advantageous Effects of Invention]

It is possible to generate random numbers with a low cross correlation between random number sequences.

[Brief Description of Drawings]

FIG. 1 is a diagram illustrating a configuration of a random number generator according to the present embodiment;
FIG. 2 is a diagram for explaining a 0-th sequence group seed list;
FIG. 3 is a diagram for explaining a j-th sequence group seed list;
FIG. 4 is a diagram illustrating an example of an all sequence group seed list;
FIG. 5 is a diagram for explaining processing of a determination unit;
FIG. 6 is a diagram (2) for explaining the processing of the determination unit;
FIG. 7 is a flowchart illustrating a processing procedure of the random number generator according to the present embodiment;
FIG. 8 is a diagram for explaining an effect of the random number generator according to the present embodiment;
FIG. 9 is a diagram for explaining an effect obtained by comparing the random number generator according to the present embodiment with the related art;
FIG. 10 is a diagram illustrating an example of a hardware configuration of a computer that implements a function similar to the random number generator according to an embodiment; and
FIG. 11 is a diagram illustrating an example of a state transition in the Monte Carlo simulation.

[Description of embodiments]

Hereinafter, an embodiment of a random number generation program and a random number generation method disclosed in the present application will be described in detail with reference to the drawings. Note that the embodiment does not limit the present invention.

[Embodiments]

A random number generator according to the present embodiment generates random number sequences with a length n that do not overlap each other with a parallel calculation application, using a pseudo random number, that generates a random number value once in a cycle.

In the "random number sequences with the length n that do not overlap each other", even if all calculation cores respectively generate n random numbers, it is guaranteed that the random numbers do not overlap, and the cross correlation between the random number sequences is reduced.

Because a random number sequence according to the xorshift is guaranteed to have no cross correlation between partial sequences, if the "random number sequences with the length n that do not overlap each other" are obtained, for example, the random number sequences with no cross correlation can be obtained.

The random number generator according to the present embodiment can cope with a case of scale-up or scale-out by applying distributed parallel calculation. In the present embodiment, random number seeds on (m * l) calculation cores are efficiently generated using m seed lists that have been prepared in advance. The reference l indicates a given degree of parallelism coefficient.

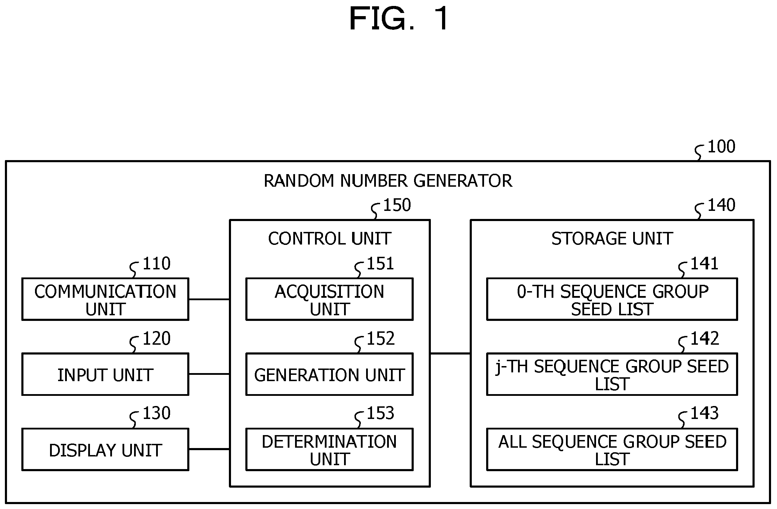

An example of a configuration of the random number generator according to the present embodiment will be described. FIG. 1 is a diagram illustrating the configuration of the random number generator according to the present embodiment. As illustrated in FIG. 1, a random number generator 100 includes a communication unit 110, an input unit 120, a display unit 130, a storage unit 140, and a control unit 150.

The communication unit 110 is wiredly or wirelessly connected to an external device or the like and transmits/receives information to/from the external device or the like. For example, the communication unit 110 is implemented by a Network Interface Card (NIC) or the like. The communication unit 110 may be connected to a network (not illustrated).

The input unit 120 is an input device that inputs various types of information to the random number generator 100. The input unit 120 corresponds to a keyboard, a mouse, a touch panel, or the like. For example, a user may operate the input unit 120 to specify a degree of parallelism coefficient "l" or the like.

The display unit 130 is a display device that displays information output from the control unit 150. The display unit 130 corresponds to a liquid crystal display, an organic Electro Luminescence (EL) display, a touch panel, or the like.

The storage unit 140 includes a 0-th sequence group seed list 141, a j-th sequence group seed list 142, and an all sequence group seed list 143. The storage unit 140 is implemented by, for example, a semiconductor memory element such as a random access memory (RAM) or a flash memory or a storage device such as a hard disk, an optical disk, or the like.

Before explaining the 0-th sequence group seed list 141, the j-th sequence group seed list 142, and the all sequence group seed list 143, a basic sequence R will be described. It is assumed that the basic sequence R satisfy the following three properties as a pseudo random number.

(Property 1) A random number value is decisively calculated using a seed s and a generation expression X (). Hereinafter, calculation of an i-th random number is expressed by the expression (3).

[Expression 3]

$$R(i,s) = X^i(s) \qquad \cdots (3)$$

(Property 2) The exclusive OR (XOR) operation has linearity. The linearity is defined by the expression (4).

[Expression 4]

$$R(i,s0) \oplus R(i,s1) = R(i,s0 \oplus s1) \ for \ \forall \, s0, s1, where \ s0 \neq s1 \qquad \cdots (4)$$

(Property 3) The random number value is generated once in a cycle.

As pseudo random numbers having the above properties 1 to 3, LFSR and xorshift are known.

Here, an example of the generation expression X () included in the expression (3) or the like will be described. $X^i$ () means to execute the generation expression X() i times.

The generation formula X () is a combination of a shift operation and an exclusive OR. When definition of the generation expression X () is described in C language, the definition is as indicated in the expression (5). The expression (5) corresponds to xorshift 64. In the expression (5), y = R (i) is satisfied, and R (0) = s (seed value) is satisfied. "^" indicates an exclusive OR. ">>" indicates a rightward bit shift. "<<" indicates a leftward bit shift.

[Expression 5]

$$unit64\_t \, X(unit64\_t \, y)\{$$
$$y = y^\wedge(y << 13); y = y^\wedge(y >> 7);$$
$$return \, y^\wedge(y << 17); \qquad \cdots (5)$$
$$\}$$

A cycle of the xorshift 64 is $2^{64} - 1$, and a random number value other than zero is generated once in the cycle.

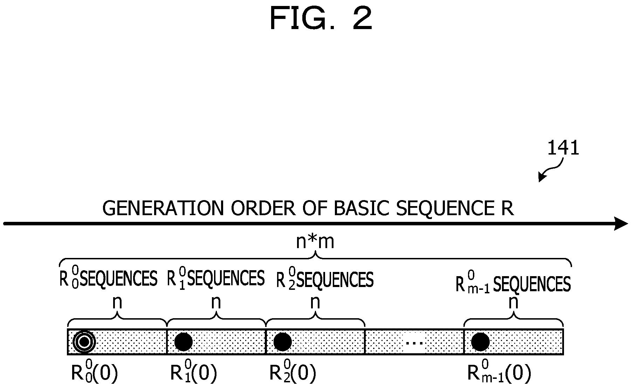

Next, the 0-th sequence group seed list 141 will be described. FIG. 2 is a diagram for explaining the 0-th sequence group seed list. The 0-th sequence group seed list 141 is a 0-th sequence group $R^0_k$ seed list (m sequences) (in the expression, although positions of "0" and "k" in the vertical direction are different from each other, "0" is positioned on "k" in practice. The same applies below). A length of the 0-th sequence group $R^0_k$ is set to "n".

The 0-th sequence group $R^0_k$ includes m partial sequences of the basic sequence R, and a set of random number sequences having seeds that are defined by the expression (6) is prepared in advance. In the expression (6), n is a constant representing a length of each sequence.

[Expression 6]

$$\{R^0_0(0), R^0_1(0), \cdots, R^0_{m-1}(0)\} = \{R(nk, s) | k = 0 \ldots m - 1\} \qquad \cdots (6)$$

By specifying one seed value of $R^0_0$, an i-th random number of $R^0_k$ is calculated using the expression (7).

[Expression 7]

$$R^0_k(i) = R\big(i, R(nk, s)\big) = X^{nk+i}(s) \qquad \cdots (7)$$

M pieces of data of the seed list $\{R^0_0 (0), R^0_1 (0),..., \text{ and } R^0_{m-1} (0)\}$ correspond to the 0-th sequence group seed list 141.

When a generation order of the basic sequence R is used as an axis, the 0-th sequence group $R^0_k$ is as illustrated in FIG. 2 and is within a range of n * m continuous sequences.

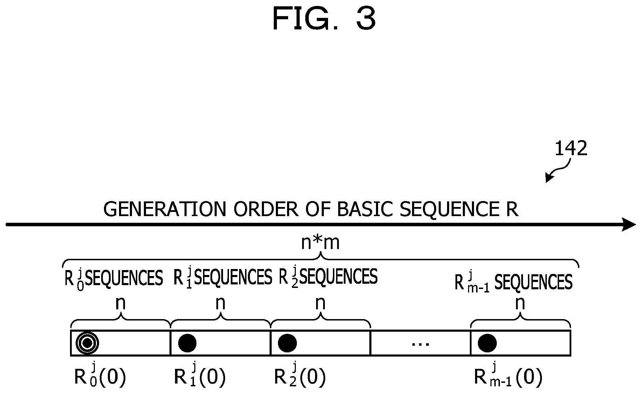

Next, the j-th sequence group seed list 142 will be described. FIG. 3 is a diagram for explaining the j-th sequence group seed list. The j-th sequence group seed list 142 is a j-th sequence group $R^j_k$ seed list (m sequences) (in the expression, although positions of "j" and "k" in vertical direction are different from each other, "j" is positioned on "k" in practice. The same applies below). A length of the j-th sequence group $R^j_k$ is set to "n".

The j-th sequence group $R^j_k$ (j = 1, 2,... and, l - 1) includes m partial sequences of the basic sequence R and is defined by the expression (8). As indicated in the expression (8), the j-th sequence group $R^j_k$ is calculated by taking an exclusive OR of the seed of the 0-th sequence group and the j-th seed from the above seed.

[Expression 8]

$$\{R^j_0(0), R^j_1(0), \cdots, R^j_{m-1}(0)\} = \left\{R^0_k(0) \oplus X^j\left(R^0_k(0)\right) | k = 0 \ldots m - 1\right\} \qquad \cdots (8)$$

The i-th random numbers of the j-th sequence group $R^j_k$ are continuous in the generation order of the basic sequence R according to the linearity of the exclusive OR. The i-th random number of the j-th sequence group $R^j_k$ is indicated by the expression (9).

[Expression 9]

$$R^j_k(i) = R\left(i, R^0_k(0) \oplus X^j\left(R^0_k(0)\right)\right) = R\left(i, R^0_k(0)\right) \oplus R\left(i, X^j\left(R^0_k(0)\right)\right) \qquad \cdots (9)$$
$$= X^{nk+i}(s) \oplus X^{nk+i+j}(s)$$

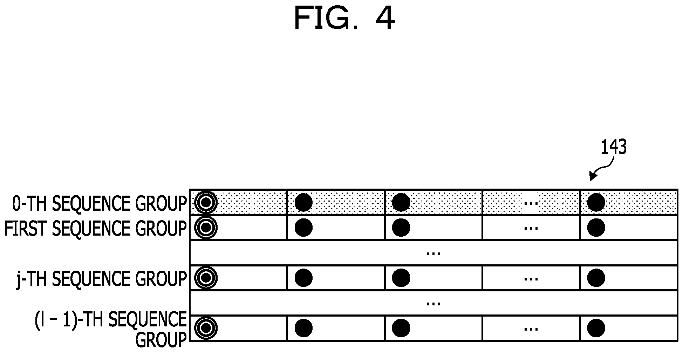

Next, the all sequence group seed list 143 will be described. FIG. 4 is a diagram illustrating an example of the all sequence group seed list. The all sequence group seed list 143 is random number sequences that are guaranteed not to have overlap of random numbers by the determination unit 153 to be described later and includes 0-th to l-1 sequence groups. The degree of parallelism of the all sequence group seed list 143 is "m * l".

The description returns to the description of FIG. 1. The control unit 150 includes an acquisition unit 151, a generation unit 152, and a determination unit 153. The control unit 150 is implemented by, for example, a Central Processing Unit (CPU) or a Micro Processing Unit (MPU). Furthermore, the control unit 150 may be implemented by, for example, an integrated circuit such as an Application Specific Integrated Circuit (ASIC), a Field Programmable Gate Array (FPGA), or the like.

The acquisition unit 151 acquires the 0-th sequence group seed list 141 that has been prepared in advance. The acquisition unit 151 may acquire the 0-th sequence group seed list 141 via a network or from the input unit 120.

The acquisition unit 151 registers the acquired 0-th sequence group seed list 141 to the storage unit 140.

The generation unit 152 generates a new random number sequence group (j-th sequence group $R^j_k$) on the basis of the 0-th sequence group seed list 141 and outputs its seed list (j-th sequence group seed list 142). The generation unit 152 generates new sequence groups until a parallelism reaches the specified degree of parallelism. Furthermore, in a case of receiving that overlap occurs in any one of sequence groups from the determination unit 153, the generation unit 152 generates new sequence groups again until the parallelism reaches the specified degree of parallelism. For example, the generation unit 152 generates seed lists of the l-th sequence group to the l + l - 1-th sequence group again.

As indicated in the expression (8), the generation unit 152 generates the seed lists {$R^j_0$ (0), $R^j_1$ (0),..., and $R^j_{m-1}$ (0)} by taking an exclusive OR of the seed of the 0-th sequence group and the j-th seed from the above seed. M pieces of data of the seed lists {$R^j_0$ (0), $R^j_1$ (0),..., and $R^j_{m-1}$ (0)} correspond to the j-th sequence group seed list 142. The generation unit 152 generates each seed list regarding j = 1 to l - 1 and registers the generated seed lists to the j-th sequence group seed list 142.

The determination unit 153 determines whether or not overlap exists in each of "m * l" sequence groups. In the determination regarding each $R^j_k$ sequence by the determination unit 153, n random numbers are generated based on each seed, and it is determined whether or not the random number matches any one of first seeds of the sequence groups other than the own sequence group. When it is determined that the match occurs in any one of the $R^j_k$ sequences, the determination unit 153 outputs that an overlap occurs in any one of the sequence groups to the generation unit 152.

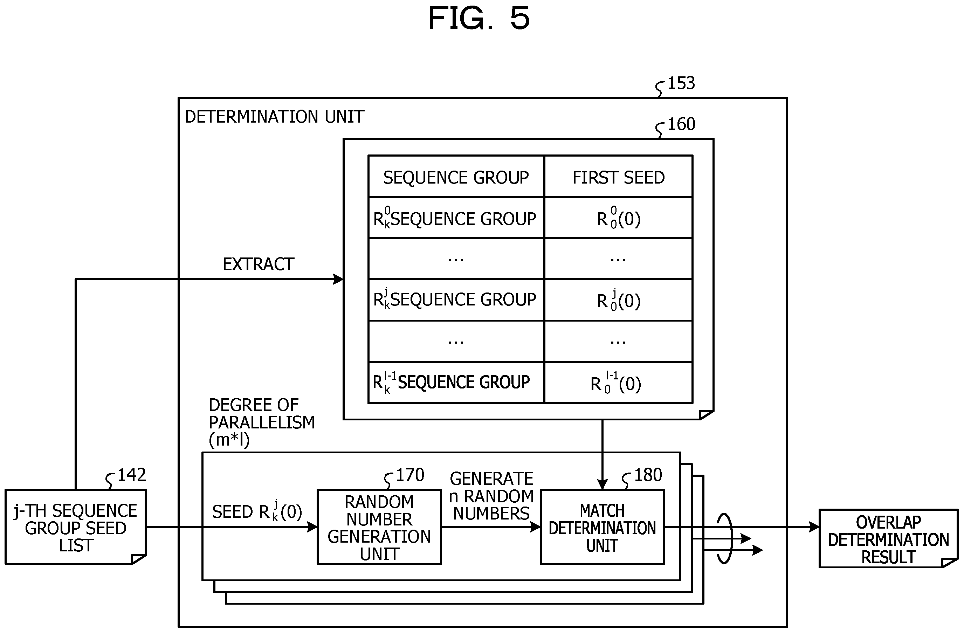

FIG. 5 is a diagram (1) for explaining processing of the determination unit. As illustrated in FIG. 5, the determination unit 153 includes a table 160, a random number generation unit 170, and a match determination unit 180.

The determination unit 153 extracts a first seed of each sequence group from the j-th sequence group seed list 142 (0-th sequence group seed list 141) and registers the extracted seed to the table 160. For example, the determination unit 153 extracts a first seed $R^0_0$ (0) from the $R^0_k$ sequence group and registers the extracted seed to the table 160. The determination unit 153 extracts a first seed $R^j_0$ (0) from the $R^j_k$ sequence group and registers the extracted seed to the table 160. Note that it is assumed that j = 1, 2,..., and l - 1.

The random number generation unit 170 acquires the first seed $R^j_0$ (0) from the j-th sequence group seed list 142 and generates n random numbers. For example, the random number generation unit 170 calculates $R^1_0$ (1) to $R^1_0$ (n - 1) based on the seed $R^1_0$ (0). The random number generation unit 170 calculates $R^1_0$ (i + 1) in order using the formula (2). The random number generation unit 170 outputs the n $R^1_0$ (0) to $R^1_0$ (n - 1) to the match determination unit 180.

The random number generation unit 170 similarly generates n random numbers for each of other first seeds $R^j_0$ (0) and outputs the generated random numbers to the match determination unit 180.

The match determination unit 180 compares the random number acquired from the random number generation unit 170 with the first seed of the table 160 (first seed other than itself) and determines whether or not a random number that matches the first seed exists.

For example, processing of the match determination unit 180 will be described using the n $R^1_0$ (0) to $R^1_0$ (n - 1). The match determination unit 180 acquires first seeds $R^0_0$ (0), $R^2_0$ (0),... and, $R^{l-1}_0$ (0) other than the first seed of the own group from the table 160 and compares the acquired first seeds with $R^1_0$ (0) to $R^1_0$ (n - 1). In a case where any one of the first seeds $R^0_0$ (0), $R^2_0$ (0),... and, $R^{1-1}_0$ (0) other than the first seed of the own group is included in $R^1_0$ (0) to $R^1_0$ (n - 1), the match determination unit 180 determines that the sequence groups overlap.

The match determination unit 180 similarly determines that the sequence groups overlap for n $R^2_0$ (0) to $R^2_0$ (n - 1) and n $R^3_0$ (0) to $R^3_0$ (n - 1),..., and $R^{l-1}_0$ (0) to $R^{l-1}_0$ (n - 1).

When it is determined that the match occurs in any one of $R^j_k$ sequences, the match determination unit 180 outputs that the sequence groups overlap to the generation unit 162. The match determination unit 180 repeatedly executes the above processing based on the j-th sequence group seed list 142 that has been generated again by the generation unit 162 until the sequence groups do not overlap.

Note that the match determination unit 180 may include a plurality of pairs of the random number generation unit 170 and the match determination unit 180 and execute determinations regarding the respective $R^j_k$ sequences in parallel.

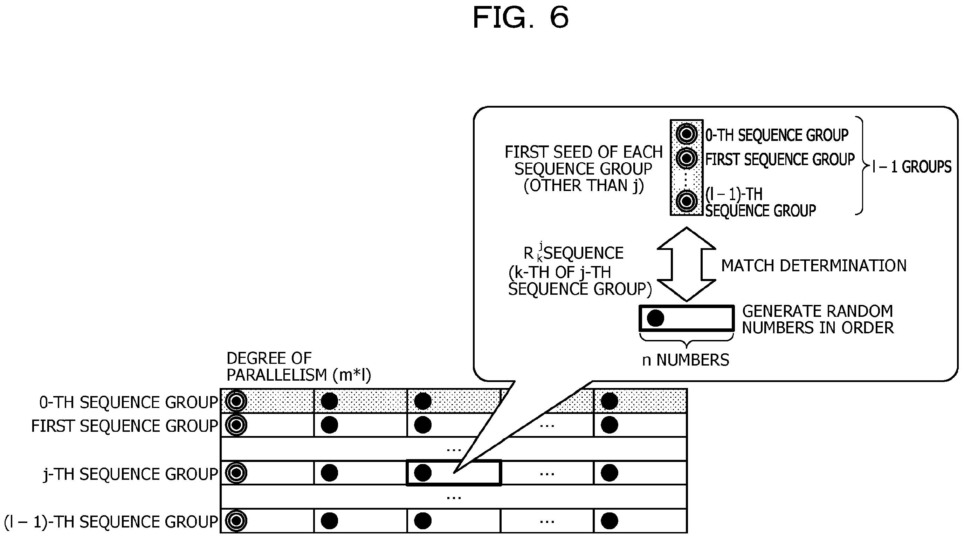

FIG. 6 is a diagram (2) for explaining the processing of the determination unit. As described with reference to FIG. 5, the determination unit 153 generates n random numbers from the j-th sequence group seed list 142 and determines whether or not the random number matches any one of the first seeds of the respective sequence groups. In the example illustrated in FIG. 6, a case is illustrated where a first seed of the $R^j_k$ sequence (k-th in j-th sequence group) is compared with a first seed of each sequence group other than the j-th sequence group. If the degree of parallelism is "m * l", the processing executed by the determination unit 153 can be executed in a time period of O (n * l) at most.

When the sequence groups do not overlap, the match determination unit 180 stores the j-th sequence group seed list 142 in the storage unit 140 as the all sequence group seed list 143. The random number generator 100 may transmit the all sequence group seed list 143 to an external device.

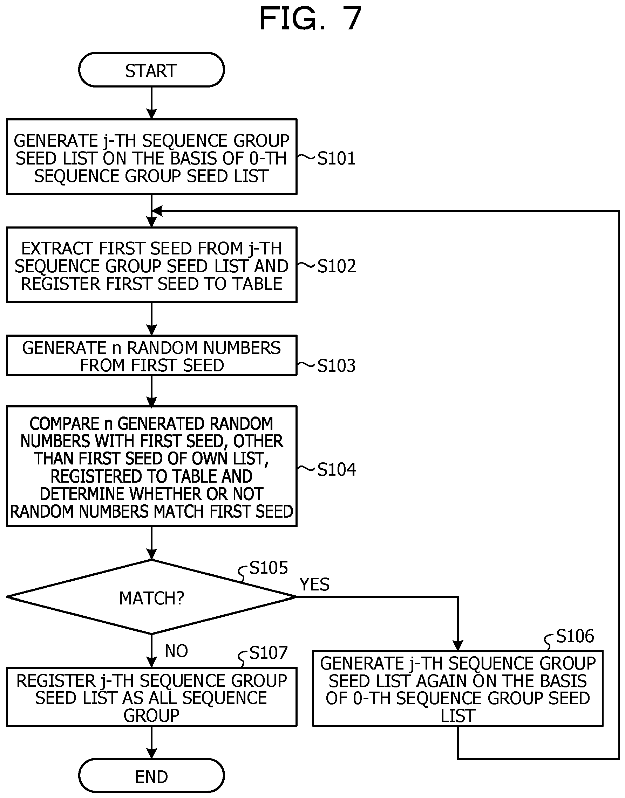

Next, an example of a processing procedure of the random number generator 100 according to the present embodiment will be described. FIG. 7 is a flowchart illustrating a processing procedure of the random number generator according to the present embodiment. As illustrated in FIG. 7, the generation unit 152 of the random number generator 100 generates the j-th sequence group seed list 142 based on the 0-th sequence group seed list 141 (step S101).

The determination unit 153 of the random number generator 100 extracts a first seed from the j-th sequence group seed list and registers the extracted seed to the table 160 (step S102). The determination unit 153 generates n random numbers from the first seed (step S103).

The determination unit 153 compares the generated n random numbers with the first seeds, other than the first seed of the own group, registered in the table 160 and determines whether or not the random numbers match the first seeds (step S104).

When the random number matches the seed (Yes in step S105), the random number generator 100 proceeds to step S106. The generation unit 152 generates the j-th sequence group seed list again on the basis of the 0-th sequence group seed list 141 (step S106) and proceeds to step S102.

On the other hand, when the random number does not match the seed (No in step S105), the random number generator 100 proceeds to step S107. The determination unit 153 registers the j-th sequence group seed list to the storage unit 140 as the all sequence group seed list 143 (step S107).

Next, effects of the random number generator 100 according to the present embodiment will be described. The random number generator 100 generates the j-th sequence group seed list 142 based on the 0-th sequence group seed list 141. The random number generator 100 generates a random number with a length n for each $R^j_k$ sequence based on the seed included in the j-th sequence group seed list 142 and repeatedly executes the processing for generating random numbers until the generated random number does not match any one of the first seeds of the $R^j_k$ sequence. This makes it possible to generate random numbers with low cross-correlation between random number sequences.

As indicated in the expression (8), the random number generator 100 generates a result of taking an exclusive OR of the k-th seed included in the 0-th sequence group seed list 141 and a value obtained by substituting the k-th seed into the generation expression X () as a seed of the j-th sequence group seed list 142. Accordingly, the j-th sequence group seed list 142 can be easily calculated.

Because the random number generator 100 determines whether or not the first seed of the $R^j_k$ sequence group matches n random numbers generated from the given seed, the random number generator 100 can execute the processing for determining whether or not the seed matches the random numbers with a calculation amount of O (n * l).

The random number generator 100, for example, generates the j-th sequence group $R^j_k$ until the degree of parallelism reaches the degree of parallelism (m * l). Therefore, it is possible to flexibly cope with an increase in the degree of parallelism.

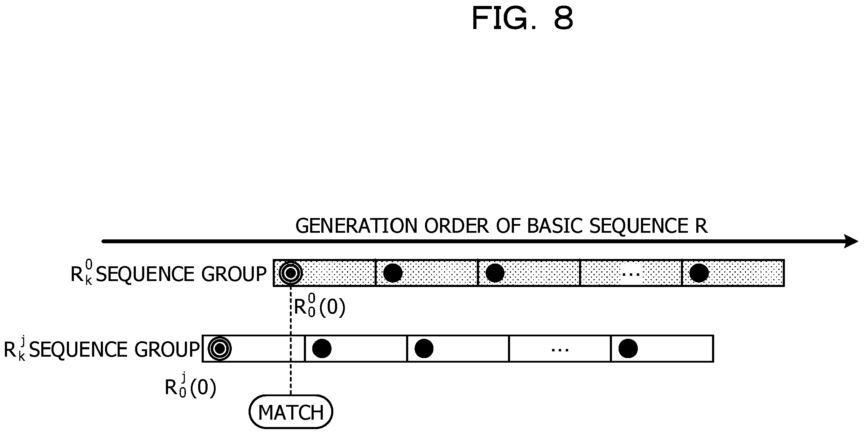

FIG. 8 is a diagram for explaining an effect of the random number generator according to the present embodiment. According to exclusive OR linearity of pseudo random numbers, the random number generator 100 can generate a seed of the j-th sequence only by applying the exclusive OR once and a random number generation expression (for example, expression (10)) j times by the generation unit 152.

[Expression 10]

$$y \oplus X^j(y) \qquad \cdots (10)$$

Because the individual sequence groups are continuous in the generation order of the basic sequence, it is sufficient for the determination unit 153 to determine whether or not match occurs (overlap determination) using only one value (first seed) of each sequence group, and it is possible to reduce the calculation amount. For example, as illustrated in FIG. 8, when $R^0_0$ (0) "matches" any one of the $R^j_k$ sequence group, it is guaranteed that the first seed is included in any one of $R^j_k$ sequence.

Furthermore, because the random number generator 100 can determine the $R^j_k$ sequence in parallel, high calculation efficiency can be expected.

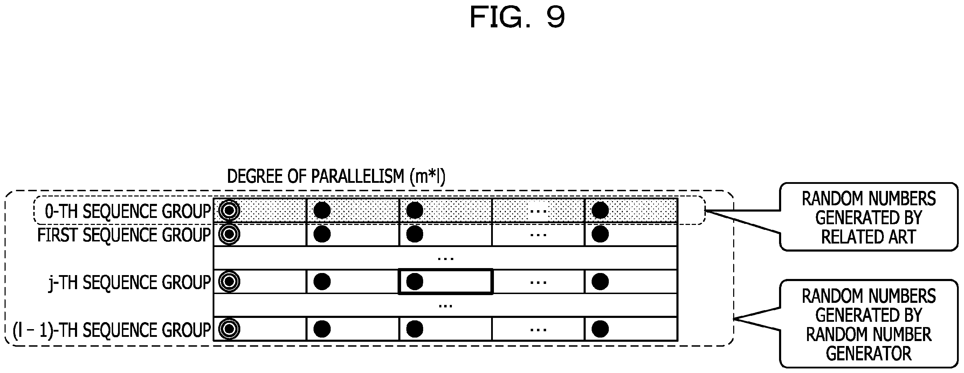

FIG. 9 is a diagram for explaining an effect obtained by comparing the random number generator according to the present embodiment with the related art. For example, the related art only generates a random number (corresponding to 0-th sequence group of the present embodiment) having m seeds. Therefore, with the related art, it is not possible to generate n * m or more random numbers.

On the other hand, the random number generator 100 can generate m * l seeds using the m seeds of the 0-th sequence group as an input, and as a result, can generate m * l * n random numbers.

Although both the related art and the random number generator 100 according to the present embodiment use the m seeds as an input, the related art can generate m * n random numbers, and the random number generator 100 can generate m * l * n random numbers. The random number generator 100 can more flexibly increase the degree of parallelism.

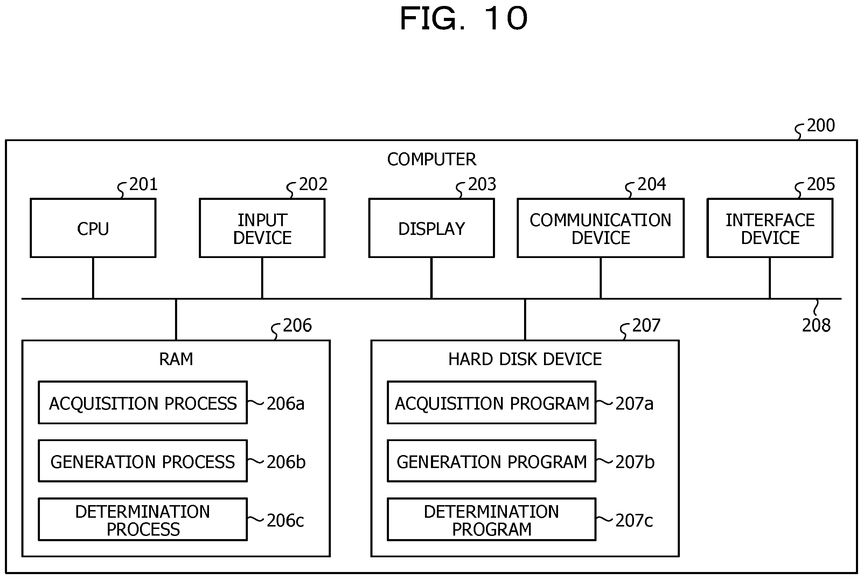

Next, an example of a hardware configuration of a computer that implements functions similar to the random number generator 100 indicated in the above embodiment will be described. FIG. 10 is a diagram illustrating an example of a hardware configuration of a computer that implements a function similar to the random number generator according to an embodiment.

As illustrated in FIG. 10, a computer 200 includes a CPU 201 that executes various types of calculation processing, an input device 202 that accepts data input from a user, and a display 203. Furthermore, the computer 200 includes a communication device 204 that exchanges data with an external device or the like via a wired or wireless network and an interface device 205. Furthermore, the computer 200 includes a RAM 206 that temporarily stores various types of information, and a hard disk device 207. Then, each of the devices 201 to 207 is connected to a bus 208.

The hard disk device 207 includes an acquisition program 207a, a generation program 207b, and a determination program 207c. Furthermore, the CPU 201 reads each of the programs 207a to 207c, and loads the programs to the RAM 206.

The acquisition program 207a functions as an acquisition process 206a. The generation program 207b functions as a generation process 206b. The determination program 207c functions as a determination process 206c.

Processing of the acquisition process 206a corresponds to the processing of the acquisition unit 151. Processing of the generation process 206b corresponds to the processing of the generation unit 152. Processing of the determination process 206c corresponds to the processing of the determination unit 153.

Note that it is not needed to necessarily store each of the programs 207a to 207c in the hard disk device 207 in advance. For example, each of the programs may be stored in a "portable physical medium" to be inserted in the computer 200, such as a flexible disk (FD), a compact disc read only memory (CD-ROM), a digital versatile disc (DVD), a magneto-optical disk, and an IC card. Then, the computer 200 may read each of the programs 207a to 207c and execute the programs.

**Claims**

1. A random number generation program in which a computer performs processing of:

   generating a second seed list that includes a new seed for each new random number sequence based on a first seed list that includes a seed for each random number sequence regarding a plurality of the random number sequences with a predetermined length;
   generating a random number with a predetermined length for each new random number sequence based on a seed included in the second seed list;
   determining whether or not the generated random number with the predetermined length matches the seed included in the second seed list; and
   repeatedly generating the second seed list until the random number with the predetermined length does not match the seed included in the second seed list.

2. The random number generation program according to claim 1, wherein
   the random number sequence included in the first seed list corresponds to a basic sequence that satisfies a property of a pseudo random number, and the generating the second seed list generates a result of taking an exclusive OR between a k-th seed included in the first seed list and a value obtained by substituting a k-th seed into a predetermined generation expression as the k-th seed of the second seed list.

3. The random number generation program according to claim 1 or 2, wherein
   the determining includes determining whether or not a first seed of the plurality of new random number sequences matches any one of the random numbers with the predetermined length.

4. The random number generation program according to any one of claims 1 to 3, wherein
   the generating the second seed list generates a seed of a new random number sequence of which a degree of parallelism reaches a specified degree of parallelism.

5. A random number generation method comprising:

   generating a second seed list that includes a new seed for each new random number sequence based on a first seed list that includes a seed for each random number sequence regarding a plurality of the random number sequences with a predetermined length;
   generating a random number with a predetermined length for each new random number sequence based on a seed included in the second seed list;
   determining whether or not the generated random number with the predetermined length matches the seed included in the second seed list; and

repeatedly generating the second seed list until the random number with the predetermined length does not match the seed included in the second seed list.

6. The random number generation method according to claim 5, wherein
the random number sequence included in the first seed list corresponds to a basic sequence that satisfies a property of a pseudo random number, and the generating the second seed list generates a result of taking an exclusive OR between a k-th seed included in the first seed list and a value obtained by substituting a k-th seed into a predetermined generation expression as the k-th seed of the second seed list.

7. The random number generation method according to claim 5 or 6, wherein
the determining includes determining whether or not a first seed of the plurality of new random number sequences matches any one of the random numbers with the predetermined length.

8. The random number generation method according to any one of claims 5 to 7, wherein
the generating the second seed list generates a seed of a new random number sequence of which a degree of parallelism reaches a specified degree of parallelism.

9. A random number generation apparatus comprising:

a memory; and
a processor coupled to the memory and configured to:

generate a second seed list that includes a new seed for each new random number sequence based on a first seed list that includes a seed for each random number sequence regarding a plurality of the random number sequences with a predetermined length,
generate a random number with a predetermined length for each new random number sequence based on a seed included in the second seed list,
determine whether or not the generated random number with the predetermined length matches the seed included in the second seed list, and
repeatedly generate the second seed list until the random number with the predetermined length does not match the seed included in the second seed list.

# FIG. 1

EP 4 033 348 A1

RANDOM NUMBER GENERATOR — 100

CONTROL UNIT — 150

STORAGE UNIT — 140

COMMUNICATION UNIT — 110

INPUT UNIT — 120

DISPLAY UNIT — 130

ACQUISITION UNIT — 151

GENERATION UNIT — 152

DETERMINATION UNIT — 153

0-TH SEQUENCE GROUP SEED LIST — 141

j-TH SEQUENCE GROUP SEED LIST — 142

ALL SEQUENCE GROUP SEED LIST — 143

# FIG. 2

141

GENERATION ORDER OF BASIC SEQUENCE R

$n*m$

| $R_0^0$ SEQUENCES | $R_1^0$ SEQUENCES | $R_2^0$ SEQUENCES | | $R_{m-1}^0$ SEQUENCES |
| :---: | :---: | :---: | :---: | :---: |
| $n$ | $n$ | $n$ | ... | $n$ |

$R_0^0(0)$  $R_1^0(0)$  $R_2^0(0)$  $R_{m-1}^0(0)$

# FIG. 3

142

GENERATION ORDER OF BASIC SEQUENCE R

$n*m$

$R_0^j$ SEQUENCES    $R_1^j$ SEQUENCES    $R_2^j$ SEQUENCES    $R_{m-1}^j$ SEQUENCES

$n$    $n$    $n$    $n$

◎    ●    ●    ...    ●

$R_0^j(0)$    $R_1^j(0)$    $R_2^j(0)$    $R_{m-1}^j(0)$

# FIG. 4

143

| | | | | | |
|---|---|---|---|---|---|
| 0-TH SEQUENCE GROUP | ◉ | ● | ● | ... | ● |
| FIRST SEQUENCE GROUP | ◉ | ● | ● | ... | ● |
| | ... | | | | |
| j-TH SEQUENCE GROUP | ◉ | ● | ● | ... | ● |
| | ... | | | | |
| (l – 1)-TH SEQUENCE GROUP | ◉ | ● | ● | ... | ● |

## FIG. 5

**DETERMINATION UNIT** — 153

160

| SEQUENCE GROUP | FIRST SEED |
|---|---|
| $R_k^0$ SEQUENCE GROUP | $R_0^0(0)$ |
| ... | ... |
| $R_k^j$ SEQUENCE GROUP | $R_0^j(0)$ |
| ... | ... |
| $R_k^{l-1}$ SEQUENCE GROUP | $R_0^{l-1}(0)$ |

EXTRACT

DEGREE OF PARALLELISM (m*l)

142 — j-TH SEQUENCE GROUP SEED LIST

SEED $R_k^j(0)$

170 — RANDOM NUMBER GENERATION UNIT

GENERATE n RANDOM NUMBERS

180 — MATCH DETERMINATION UNIT

OVERLAP DETERMINATION RESULT

14

# FIG. 6

FIRST SEED OF EACH SEQUENCE GROUP (OTHER THAN j)

0-TH SEQUENCE GROUP
FIRST SEQUENCE GROUP
(l − 1)-TH SEQUENCE GROUP
} l − 1 GROUPS

$R_k^j$ SEQUENCE (k-TH OF j-TH SEQUENCE GROUP)

MATCH DETERMINATION

GENERATE RANDOM NUMBERS IN ORDER

n NUMBERS

DEGREE OF PARALLELISM (m*l)

| | | | | | |
|---|---|---|---|---|---|
| 0-TH SEQUENCE GROUP | ◎ | ● | ● | ... | ● |
| FIRST SEQUENCE GROUP | ◎ | ● | ● | ... | ● |
| ... | | | | | |
| j-TH SEQUENCE GROUP | ◎ | ● | ● | ... | ● |
| ... | | | | | |
| (l − 1)-TH SEQUENCE GROUP | ◎ | ● | ● | ... | ● |

EP 4 033 348 A1

# FIG. 7

START

GENERATE j-TH SEQUENCE GROUP SEED LIST ON THE BASIS OF 0-TH SEQUENCE GROUP SEED LIST ~S101

EXTRACT FIRST SEED FROM j-TH SEQUENCE GROUP SEED LIST AND REGISTER FIRST SEED TO TABLE ~S102

GENERATE n RANDOM NUMBERS FROM FIRST SEED ~S103

COMPARE n GENERATED RANDOM NUMBERS WITH FIRST SEED, OTHER THAN FIRST SEED OF OWN LIST, REGISTERED TO TABLE AND DETERMINE WHETHER OR NOT RANDOM NUMBERS MATCH FIRST SEED ~S104

MATCH? S105

YES → GENERATE j-TH SEQUENCE GROUP SEED LIST AGAIN ON THE BASIS OF 0-TH SEQUENCE GROUP SEED LIST S106

NO → REGISTER j-TH SEQUENCE GROUP SEED LIST AS ALL SEQUENCE GROUP S107

END

# FIG. 8

GENERATION ORDER OF BASIC SEQUENCE R →

$R_k^0$ SEQUENCE GROUP

$R_0^0(0)$

$R_k^j$ SEQUENCE GROUP

$R_0^j(0)$

MATCH

# FIG. 9

DEGREE OF PARALLELISM (m*l)

| 0-TH SEQUENCE GROUP | ◎ | ● | ● | ... | ● |
|---|---|---|---|---|---|
| FIRST SEQUENCE GROUP | ◎ | ● | ● | ... | ● |

...

| j-TH SEQUENCE GROUP | ◎ | ● | ● | ... | ● |

...

| (l – 1)-TH SEQUENCE GROUP | ◎ | ● | ● | ... | ● |

RANDOM NUMBERS GENERATED BY RELATED ART

RANDOM NUMBERS GENERATED BY RANDOM NUMBER GENERATOR

# FIG. 10

COMPUTER (200)

| CPU (201) | INPUT DEVICE (202) | DISPLAY (203) | COMMUNICATION DEVICE (204) | INTERFACE DEVICE (205) |

RAM (206)
- ACQUISITION PROCESS — 206a
- GENERATION PROCESS — 206b
- DETERMINATION PROCESS — 206c

HARD DISK DEVICE (207)
- ACQUISITION PROGRAM — 207a
- GENERATION PROGRAM — 207b
- DETERMINATION PROGRAM — 207c

208

EP 4 033 348 A1

# FIG. 11

**EUROPEAN SEARCH REPORT**

Europäisches
Patentamt
European
Patent Office
Office européen
des brevets

Application Number

EP 21 20 0019

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/294508 A1 (SUSSMAN MYLES A [US] ET AL) 20 December 2007 (2007-12-20) * paragraphs [0003] - [0005], [0029] - [0036]; figures 1A, 1B * | 1-9 | INV. G06F7/58 |
| A | US 2019/129694 A1 (BENTON WILLIAM CHRISTIAN [US] ET AL) 2 May 2019 (2019-05-02) * paragraphs [0015] - [0027]; figures 1, 2A * | 1-9 | |
| A | STEELE GUY L GUY STEELE@ORACLE COM ET AL: "Fast splittable pseudorandom number generators", ACM SIGPLAN NOTICES, ASSOCIATION FOR COMPUTING MACHINERY, US, vol. 49, no. 10, 15 October 2014 (2014-10-15), pages 453-472, XP058493162, ISSN: 0362-1340, DOI: 10.1145/2714064.2660195 * section 2 * | 1-9 | |
| A | CIGLARIC TADEJ ET AL: "An OpenCL library for parallel random number generators", THE JOURNAL OF SUPERCOMPUTING, SPRINGER US, NEW YORK, vol. 75, no. 7, 17 January 2019 (2019-01-17), pages 3866-3881, XP036820836, ISSN: 0920-8542, DOI: 10.1007/S11227-019-02756-2 [retrieved on 2019-01-17] * section 2.2 * | 1-9 | |

TECHNICAL FIELDS
SEARCHED (IPC)

G06F

The present search report has been drawn up for all claims

| Place of search | Date of completion of the search | Examiner |
|---|---|---|
| Munich | 20 June 2022 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 0019

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2022

| Patent document cited in search report | Publication date | Patent family member(s) | Publication date |
|---|---|---|---|
| US 2007294508 A1 | 20-12-2007 | NONE | |
| US 2019129694 A1 | 02-05-2019 | NONE | |

EPO FORM P0459

For more details about this annex : see Official Journal of the European Patent Office, No. 12/82

**EP 4 033 348 A1**

**Patent documents cited in the description**

- JP 4199225 A
- JP 2018045501 A
- WO 2005124537 A
- JP 2016184307 A